# EUROPÄISCHE PATENTSCHRIFT

(11) **EP 1 757 916 B1**
(45) Veröffentlichungstag und Bekanntmachung des Hinweises auf die Patenterteilung: **28.09.2011**
(21) Anmeldenummer: 06290392.7
(22) Anmeldetag: 03.03.2006
(51) Int. Cl.: G01K 7/22, G01K 1/12

(54) **Anordnung zur lokalen Überwachung von Funktionen**
Device for local temperature monitoring
Dispositif pour surveiller la température locale

(30) Priorität: 01.08.2005 EP 05291649
(43) Veröffentlichungstag der Anmeldung: 28.02.2007
(73) Patentinhaber: Nexans, 75008 Paris (FR)
(72) Erfinder: Lang, Rainer, 92697 Georgenberg (DE); Nachbauer, Otto, 92685 Floss (DE); Helgert, Michael, 92685 Floss (DE); Riedel, Richard Dipl.-Ing., 92685 Floss (DE)
(74) Vertreter: Döring, Roger

(56) Entgegenhaltungen:
- EP-A- 1 014 060
- WO-A-03/054496
- DE-U1- 8 804 012
- JP-A- 11 160 162
- PATENT ABSTRACTS OF JAPAN Bd. 011, Nr. 305 (P-623), 6. Oktober 1987 (1987-10-06) & JP 62 096829 A (MITSUBISHI ELECTRIC CORP), 6. Mai 1987 (1987-05-06)

## Beschreibung

Die Erfindung bezieht sich auf eine Anordnung zur lokalen Überwachung von Funktionen, bei welcher ein Sensor über elektrische Leiter an eine Spannungsquelle angeschlossen ist, bei welcher der Sensor zusammen mit mindestens einem weiteren elektrischen bzw. elektronischen Bauteil auf einer mit Leiterbahnen versehenen Platine angeordnet ist, durch deren Leiterbahnen er elektrisch leitend mit dem ebenfalls an die Leiterbahnen angeschlossenen Bauteil verbunden ist, und bei welcher die Platine in einem Gehäuse angeordnet ist (JP-A-62096829).

"Sensor" im Sinne der Erfindung soll ein Bauteil sein, daß in Maschinen und Geräten an bestimmten Stellen Funktionen überwacht und in elektrische Größen umsetzt, die ausgewertet werden können. "Funktionen" können dabei insbesondere Positionen, Drehzahlen und Temperaturen sein. Stellvertretend für alle möglichen Funktionen werden im folgenden Temperaturen berücksichtigt, mit einem als Temperaturfühler ausgeführten Sensor.

Eine Anordnung mit einem Temperaturfühler wird beispielsweise überall dort eingesetzt, wo bei Maschinen und Geräten mit Wärmeerzeugern sichergestellt werden soll, daß an vorgegebenen Stellen keine zu hohen Temperaturen auftreten. Es kann dann gegebenenfalls für eine Kühlung gesorgt werden oder es kann die jeweilige Wärmequelle zumindest kurzfristig außer Betrieb gesetzt werden. In üblicher Technik wird als Temperaturfühler beispielsweise ein auch als Heißleiter bezeichneter NTC-Widerstand (Negative Temperature Coefficient) eingesetzt, der mit zwei elektrischen Leitern bestückt und zur Stromversorgung an eine Steuereinheit angeschlossen ist, die ihrerseits mit einer Spannungsquelle verbunden ist. Der Temperaturfühler - im folgenden kurz als "NTC" bezeichnet - ist zu seinem Schutz üblicherweise in Isoliermaterial eingebettet, beispielsweise in Epoxydharz. Ein NTC ist ein temperaturabhängiger elektrischer Widerstand, dessen Widerstandswert mit steigender Temperatur kleiner wird. Der Widerstandswert kann mittels einer in der Steuereinheit vorhandenen Auswerteelektronik überwacht werden, durch welche gegebenenfalls eine Maßnahme zur Temperaturabsenkung veranlaßt werden kann.

Ein Einsatzgebiet einer solchen Anordnung sind beispielsweise Kraftfahrzeuge. Stellen, an denen ein NTC zur Temperaturüberwachung angeordnet werden kann, liegen dann beispielsweise im Bereich des Motors oder an Kompressoren für Luftfederungen oder beim Getriebeöl. Die auf dem Markt erhältlichen und im Einsatz befindlichen Anordnungen mit einem NTC arbeiten grundsätzlich befriedigend. Es kann jedoch geschehen, daß beispielsweise durch äußere elektromagnetische Felder elektrische Spannungen in den Leitern induziert werden, mit denen ein NTC an die Auswerteelektronik angeschlossen ist. Dadurch können in den Leitern fließende Störströme erzeugt werden, so daß der jeweilige NTC nicht nur durch seine Umgebung, sondern zusätzlich auch elektrisch erwärmt wird. Das Meßergebnis kann in diesem Fall verfälscht werden, da der Widerstandswert des NTCs auf einen Wert abgesenkt wird, der nicht der Umgebungstemperatur entspricht. Durch zu hohe Spannungen, die dem NTC versehentlich zugeführt werden können, kann derselbe außerdem zerstört werden. Zur Erzielung einwandfreier, reproduzierbarer Meßergebnisse ist es außerdem erforderlich, daß der NTC auf möglichst einfache Weise in einer bestimmten Position montiert werden kann, die auch während des Betriebes eines Kraftfahrzeugs bzw. eines anderen Geräts stabil erhalten bleibt.

Die bekannte Anordnung nach der JP-A-62096829 dient zur Überwachung der Temperatur des Kühlwassers einer Maschine. Zwei temperaturabhängige Widerstände sind bei dieser Anordnung neben anderen Bauteilen auf einer aus keramischem Material bestehenden Platine angeordnet. Die Platine ist in einem metallischen Gehäuse untergebracht, dessen Stirnfläche selbst als Temperaturfühler dient, von dem der jeweilige Temperaturwert auf einen der temperaturabhängigen Widerstände übertragen wird.

Der Erfindung liegt die Aufgabe zugrunde, die eingangs geschilderte Anordnung so zu gestalten, daß der NTC auf einfache Weise vor Fremdeinflüssen geschützt ist und ebenso einfach in eine stabile Position gebracht werden kann.

Diese Aufgabe wird gemäß der Erfindung dadurch gelöst,
- daß die Platine mit an die Leiterbahnen angeschlossenen Leitern in einem dieselbe aufnehmenden Halter aus mechanisch stabilem Isoliermaterial angeordnet ist, der begrenzende Anschläge für die Platine und seitwärts abstehende Rastelemente aufweist, und
- daß der Halter mit eingesetzter Platine mittels der Rastelemente in vorgegebener Position in dem Gehäuse verrastet ist, das mit einer Halter und Platine hohlraumfrei umschließenden Masse gefüllt ist.

Bei dieser Anordnung sind alle Bauteile und insbesondere der NTC auf der Platine angebracht, die in ihrer Position durch den Halter und die umschließende Masse mechanisch stabilisiert und geschützt in dem Gehäuse untergebracht ist. Dabei ist die Platine mit angeschlossenen Leitern in dem mit begrenzenden Anschlägen versehenen Halter in stabiler Lage im Gehäuse angeordnet, wenn der Halter in Montageposition mittels seiner Rastelemente in demselben verrastet ist. Für einen zusätzlichen Schutz aller Bauteile sorgt die dieselben im Gehäuse hohlraumfrei umgebende Masse. Mit dem fertig bestückten Gehäuse liegt dann unabhängig von der Anzahl der darin befindlichen Bauteile nur ein Bauelement vor, das mit wenig Aufwand montiert werden kann und seine Montageposition stabil beibehält.

Als weiteres elektrisches bzw. elektronisches Bauteil kann beispielsweise ein Kondensator gemeinsam mit dem NTC an die Leiterbahnen der Platine angeschlossen sein. Durch den gegenüber Wechselströmen als Kurzschluß wirkenden Kondensator ist der NTC vor Strömen geschützt, die durch Induktion auf seinen Leitern erzeugt werden. Seine Gleichstromversorgung aus der Auswerteelektronik bleibt unverändert erhalten. Äußere elektromagnetische Felder können das Meßergebnis also nicht mehr verfälschen.

In bevorzugter Ausführungsform werden auf der Platine neben NTC und Kondensator auch noch ein elektrischer Widerstand als Vorwiderstand in Reihe mit dem NTC und ein weiterer elektrischer Widerstand parallel zu dem NTC an die Leiterbahnen angeschlossen. Ein Vorwiderstand schützt den NTC vor Überspannungen, die durch Fehlschaltungen entstehen können, wenn beispielsweise ein Hilfsstart des zugehörigen PKWs mit Überbrückungskabeln zu einer Batterie mit zu hoher Spannung durchgeführt werden soll. Ein parallel zum NTC geschalteter Widerstand zeigt in einer Auswerteeinheit auch bei sehr niedrigen Außentemperaturen von beispielsweise mehr als - 20 °C den bestehenden Anschluß des NTCs an.

Ein Ausführungsbeispiel des Erfindungsgegenstandes ist in den Zeichnungen dargestellt.

Es zeigen:
Fig. 1 in schematischer Darstellung eine Vorrichtung mit darin angebrachter Anordnung nach der Erfindung.
Fig. 2 schematisch eine in der Anordnung verwendbare Platine.
Fig. 3 einen Halter für die Platine in vergrößerter Darstellung.
Fig. 4 eine in den Halter eingesetzte Platine in wieder verkleinerter Darstellung.
Fig. 5 den Halter mit Platine in einem aufgeschnittenen Gehäuse.
Fig. 6 das Gehäuse in verschlossenem Zustand.

In der folgenden Beschreibung wird als Sensor weiterhin der "NTC" erläutert. Der Vollständigkeit halber sei aber erwähnt, daß der Sensor grundsätzlich beispielsweise auch zur Erfassung von Positionen und Drehzahlen dienen kann, insbesondere im Zusammenhang mit einem Antiblockiersystem (ABS) oder einem elektrischen Bremssystem (EBS) oder allen sich drehenden Teilen, beispielsweise dem Motor, von Kraftfahrzeugen. Mit dem NTC sollen alle im Sinne der Erfindung verwendbaren Temperaturfühler ebenfalls erfaßt sein. Als spezielles Einsatzgebiet werden außerdem - stellvertretend für alle anderen möglichen Einsatzgebiete - Kraftfahrzeuge erwähnt.

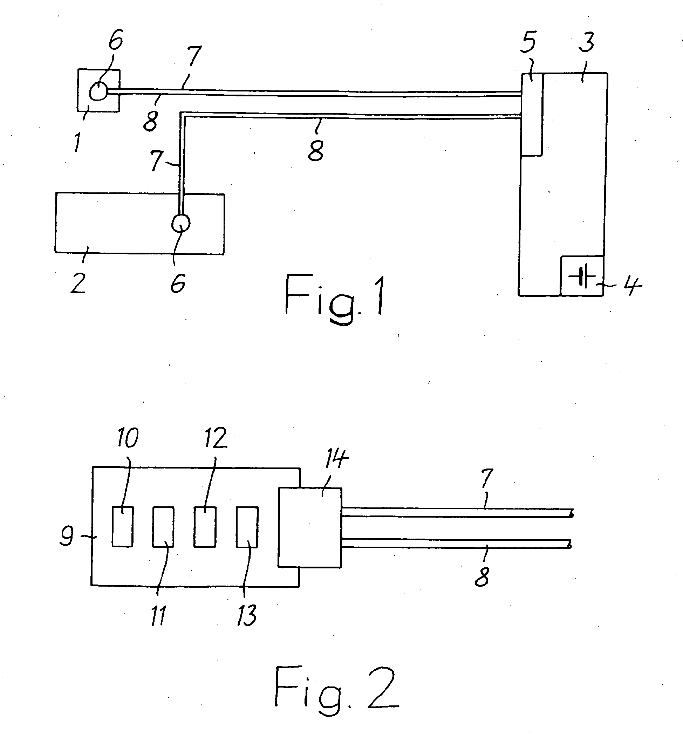

In Fig. 1 sind Teile eines Kraftfahrzeugs schematisch durch Kästchen angedeutet, beispielsweise ein Kompressor 1 für eine Luftfederung und ein Motor 2. Das Kraftfahrzeug hat außerdem eine Steuereinheit 3, welche an eine Spannungsquelle 4 angeschlossen ist, bei welcher es sich in der Regel um die Batterie des Kraftfahrzeugs handelt. In der Steuereinheit 3 ist eine Auswertelektronik 5 angeordnet.

Sowohl im Bereich des Kompressors 1 als auch im Bereich des Motors 2 ist zur Temperaturüberwachung mindestens eine Anordnung 6 positioniert, die einen NTC und mindestens ein weiteres elektrisches bzw. elektronisches Bauteil umfaßt. Jede Anordnung 6 ist über zwei elektrische Leiter 7 und 8 mit der Auswerteelektronik 5 verbunden. Anordnungen 6 können auch im Bereich anderer Teile des Kraftfahrzeugs zur Temperaturüberwachung angebracht sein. Ihr Aufbau wird im folgenden anhand der Fig. 2 bis 6 beispielsweise erläutert:

In Fig. 2 ist schematisch eine mit Leiterbahnen ausgerüstete Platine 9 dargestellt, auf der ein NTC 10, ein Kondensator 11, ein elektrischer Vorwiderstand 12 und ein zweiter elektrischer Widerstand 13 angebracht sind. Alle geschilderten Bauteile sind an die Leiterbahnen der Platine 9 angeschlossen. Der Kondensator 11 und der Widerstand 13 sind dabei elektrisch parallel zum NTC 10 geschaltet, während der Vorwiderstand 12 elektrisch in Reihe mit demselben liegt. Der Kondensator 11 schützt den NTC 10 vor durch Induktion erzeugten hohen Strömen, während der Vorwiderstand 12 denselben vor Überspannungen schützt. Der parallel liegende Widerstand 13 zeigt in der Auswerteelektronik 5 auch bei sehr niedrigen Temperaturen von unter -20 °C an, daß ein funktionsfähiger NTC 10 vorhanden ist. Über einen Steckverbinder 14 sind die mit der Auswerteelektronik 5 verbundenen Leiter 7 und 8 an die Platine 9 bzw. deren Leiterbahnen angeschlossen.

Die Platine 9 besteht vorzugsweise aus einem temperaturbeständigen Isoliermaterial, und zwar in bevorzugter Ausführungsform aus Keramik. Neben den beschriebenen Bauteilen können auch weitere elektrische bzw. elektronische Bauteile auf der Platine 9 angeordnet sein, die für eine sichere Funktion des NTCs 10 von Bedeutung sein können.

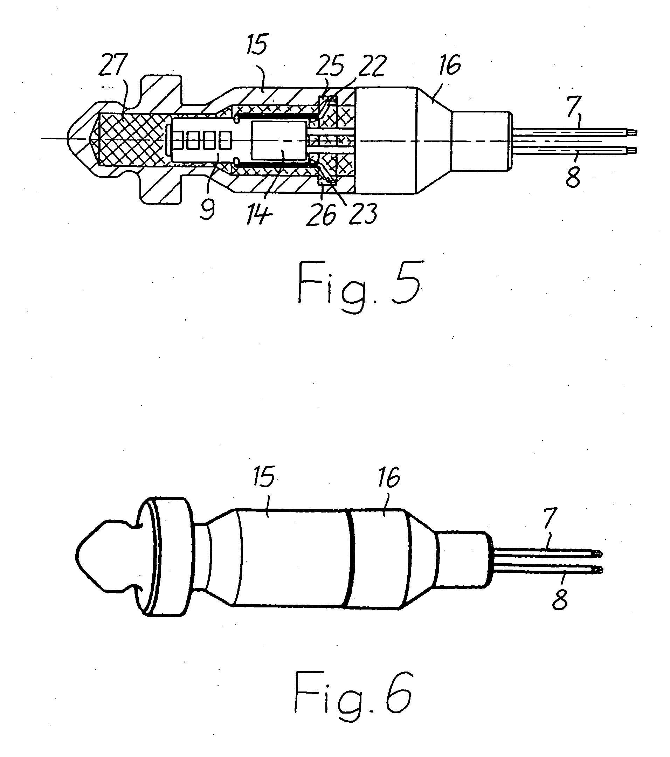

Die Platine 9 mit darauf angeordneten Bauteilen ist in Montageposition in einem aus Fig. 6 ersichtlichen Gehäuse 15 untergebracht, das mittels einer Kappe 16 verschließbar sein kann. Das Gehäuse 15 besteht vorzugsweise aus Metall, wie beispielsweise Aluminium. Es könnte aber auch aus einem temperaturbeständigen Kunststoff bestehen. Die gegebenenfalls vorhandene Kappe 16 besteht aus Kunststoff, vorzugsweise aus einem Elastomer.

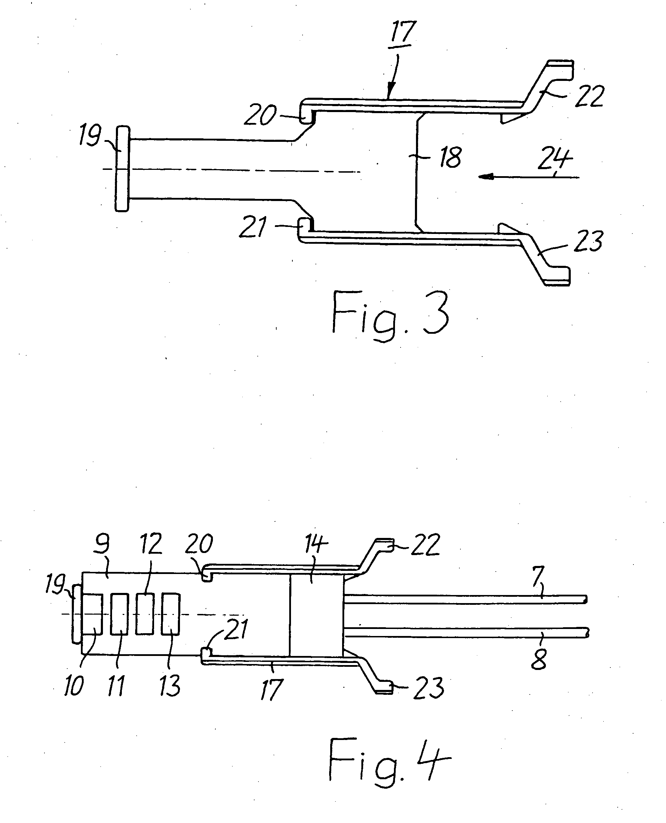

Zur sicheren und unverrückbaren Positionierung der Platine 9 im Gehäuse 15 wird dieselbe zunächst in einen Halter 17 aus mechanisch stabilem Isoliermaterial, wie beispielsweise Polybutylenterephthalat, eingesetzt. Der Halter 17 hat gemäß Fig. 3 eine Auflagefläche 18, begrenzende Anschläge 19, 20 und 21 sowie zwei Rastelemente 22 und 23, die seitwärts bzw. nach außen von demselben abstehen. In Montageposition liegt die Platine 9 auf der Auflagefläche 18 des Halters 17 in einer durch die Anschläge 19, 20 und 21 begrenzten Lage. In diese aus Fig. 4 ersichtliche Montageposition ist die Platine 9 mit daran angebrachtem Steckverbinder 14, durch Einschieben in den Halter 17 in Richtung des Pfeiles 24 gebracht worden.

Der fertig bestückte Halter 17 wird zur Fertigstellung der Anordnung in das noch offene Gehäuse 15 so weit eingeschoben, bis seine dabei nach innen gebogenen Rastelemente 22 und 23 gemäß Fig. 5 in Ausnehmungen 25 und 26 einrasten, die im Innern des Gehäuses 15 angebracht sind. In das Gehäuse 15 kann dann eine temperaturbeständige Masse 27 eingefüllt werden, welche Platine 9 und Halter 17 hohlraumfrei umschließt. Um das mit erhöhter Sicherheit zu erreichen, wird die Masse 27 zweckmäßig vor dem Einschieben des Halters 17 in das Gehäuse 15 gegebenenfalls eingefüllt. Die Masse 27 kann auf Basis von Epoxidharz, Silikon oder Polyurethan ausgeführt sein. Abschließend wird das Gehäuse 15 gegebenenfalls mittels der Kappe 16 verschlossen.

## Patentansprüche

1. Anordnung zur lokalen Überwachung von Funktionen, bei welcher ein Sensor über elektrische Leiter an eine Spannungsquelle angeschlossen ist, bei welcher der Sensor zusammen mit mindestens einem weiteren elektrischen bzw. elektronischen Bauteil auf einer mit Leiterbahnen versehenen Platine angeordnet ist, durch deren Leiterbahnen er elektrisch leitend mit dem an die Leiterbahnen angeschlossenen Bauteil verbunden ist, und bei welcher die Platine in einem Gehäuse angeordnet ist,
**dadurch gekennzeichnet,**
- **daß** die Platine (9) mit an die Leiterbahnen angeschlossenen Leitern (7,8) in einem dieselbe aufnehmenden Halter (17) aus mechanisch stabilem Isoliermaterial angeordnet ist, der begrenzende Anschläge (19,20,21) für die Platine (9) und seitwärts abstehende Rastelemente (22,23) aufweist, und
- **daß** der Halter (17) mit eingesetzter Platine (9) mittels der Rastelemente (22,23) in vorgegebener Position in dem Gehäuse (15) verrastet ist, das mit einer Halter (17) und Platine (9) hohlraumfrei umschließenden Masse (27) gefüllt ist.

2. Anordnung nach Anspruch 1, **dadurch gekennzeichnet, daß** die Platine (9) aus einem temperaturbeständigen Material besteht.

3. Anordnung nach Anspruch 2, **dadurch gekennzeichnet, daß** die Platine (9) aus Aluminium besteht.

4. Anordnung nach Anspruch 2, **dadurch gekennzeichnet, daß** die Platine (9) aus Keramik besteht.

5. Anordnung nach Anspruch 1, **dadurch gekennzeichnet, daß** das Gehäuse (15) mittels einer Kappe (16) verschlossen ist.

6. Anordnung nach einem der Ansprüche 1 bis 5, **dadurch gekennzeichnet, daß** der Sensor ein Temperaturfühler ist.

## Claims

1. Arrangement for the local monitoring of functions, in which a sensor is connected to a voltage source via electrical conductors, in which the sensor is mounted, together with at least one additional electrical or electronic component, on a printed circuit board provided with conductor tracks, the sensorbeing electrically conductively connected, via the conductor tracks of the printed circuit board, to the component connected to the conductor tracks, and in which the printed circuit board is mounted in a housing,
**characterized in**
- **that** the printed circuit board (9) with conductors (7, 8) connected to the conductor tracks is placed in a holder (17), which is made from a mechanically stable insulating material, having limiting stops (19, 20, 21) for the printed circuit board (9) and laterally protruding locking elements (22, 23), and
- **that** the holder(17) with the printed circuit board (9) inserted is locked in a prescribed position in the housing (15) by the locking elements (22, 23), the ho using (15) being filled with a compound (27) which surrounds the holder (17) and the printed circuit board (9) without any cavities.

2. Arrangement according to claim 1, **characterized in that** the printed circuit board (9) ismade from a thermally resistant material

3. Arrangement according to claim 2, **characterized in that** the printed circuit board (9) is made from aluminium.

4. Arrangement according to claim 2, **characterized in that** the printed circuit board (9) ismade from ceramic.

5. Arrangement according to claim 1, **characterized in that** the housing (15) is closed by a cap (16).

6. Arrangement according to one of the claims 1 to 5, **characterized in that** the sensor is a temperature sensor.

## Revendications

1. Arrangement pour la surveillance locale de fonctions, dans lequel un capteur est raccordé par le biais d'un conducteur électrique à une source de tension, dans lequel le capteur est disposé conjointement avec au moins un composant électrique ou électronique supplémentaire sur une platine munie de pistes conductrices, par le biais des pistes conductrices de laquelle il est relié électriquement avec le composant raccordé aux pistes conductrices, et dans lequel la platine est disposée dans un boîtier, **caractérisé en ce**
- **que** la platine (9) avec les conducteurs (7, 8) raccordés aux pistes conductrices est disposée dans un support (17) en matériau isolant mécaniquement stable qui accueille celle-ci, lequel présente des butées de délimitation (19, 20, 21) pour la platine (9) et des éléments d'enclenchement (22, 23) dépassant sur les côtés, et
- **que** le support (17) dans lequel est introduite la platine (9) est enclenché au moyen des éléments d'enclenchement (22, 23) dans une position prédéfinie dans le boîtier (15), lequel est rempli d'une masse (27) qui entoure le support (17) et la platine (9) sans laisser d'espace creux.

2. Arrangement selon la revendication 1, **caractérisé en ce que** la platine (9) se compose d'un matériau résistant à la température.

3. Arrangement selon la revendication 2, **caractérisé en ce que** la platine (9) se compose d'aluminium.

4. Arrangement selon la revendication 2, **caractérisé en ce que** la platine (9) se compose de céramique.

5. Arrangement selon la revendication 1, **caractérisé en ce que** le boîtier (15) est fermé au moyen d'un capuchon (16).

6. Arrangement selon l'une des revendications 1 à 5, **caractérisé en ce que** le capteur est une sonde de température.
